**Europäisches Patentamt**

**European Patent Office**

**Office européen des brevets**

(19)

(11) Publication number: **0 182 393**
**A2**

(12) # EUROPEAN PATENT APPLICATION

(21) Application number: **85201128.7**

(22) Date of filing: **09.07.85**

(51) Int. Cl.⁴: **H 04 M 1/72**

(30) Priority: **12.11.84 ES 282513U**

(43) Date of publication of application: **28.05.86**
Bulletin 86/22

(84) Designated Contracting States: **AT BE CH DE FR GB IT
LI LU NL SE**

(71) Applicant: **AMPER S.A., Calle Torrelaguna, no 75,
Madrid 27 (ES)**

(72) Inventor: **Lopez Garcia, Antonio, Calle Torrelaguna, 75,
E-28027 Madrid (ES)**

(74) Representative: **Modrie, Guy et al, Bureau Gevers SA 7,
rue de Livourne Bte 1, B-1050 Bruxelles (BE)**

(54) **Excluder device for telephones installed in parallel.**

(57) Excluder device for telephones installed in parallel, characterised in that it basically consists of a combination of a full wave bridge rectifier (1) with a relay circuit, made up of a zener diode (2) and a current divider consisting of two resistors (3, 4) the relay circuit being associated with a thyristor (5), whose anode is connected to the cathode of the zener diode and to the positive of the rectifier (1), whilst the cathode is connected to earth and the switch to the current divider, and in that an independent resistor is incorporated, able to cause a voltage drop equivalent to that which determines the rest of the telephone system.

The invention refers to an electronic device, suitable in those cases where several telephones have been installed in series on a single telephone line, and when one of them is in use, the user wishes all the other telephones to be excluded from conversation.

Devices have already been proposed, and are known on the market, which fulfill this objective. However, they are based on fundamentally complex concepts and are relatively large in size, and thus should be considered as an independent and auxiliary equipment of the telephone. Because of this, these devices entail manufacturing costs which are sufficiently high to have inhibited their popularization.

The device hereby proposed, on the contrary, is characterised by a construction which, although original, is extremely simple. It can be manufactured in the form of a hybrid circuit which can be incorporated into the telephone when it is being assembled, just as one more component, at almost no extra cost for the entire telephone unit.

Essentially, and as it will be seen in greater detail below, the device is made up by combining a full wave bridge rectifier with a relay circuit, couple in parallel with a thyristor.

This assembly, repeated in each of the telephones installed in parallel on the same line, enables the line to be opened when any one of the telephones is taken off to make or receive a call, but at the same time automatically causes the other telephones to be cut off and go temporarily out of service.

A set of drawings if attached to this specification, so that the characteristics of this excluder device and its mode of operation can be more clearly understood.

FIGURE 1 illustrates the electronic circuit of the excluder device and the way in which it is connected to the line and to the telephone.

FIGURE 2 is a block diagram of the installation on a single line of a number n of telephones into which the excluder device of this invention has been incorporated.

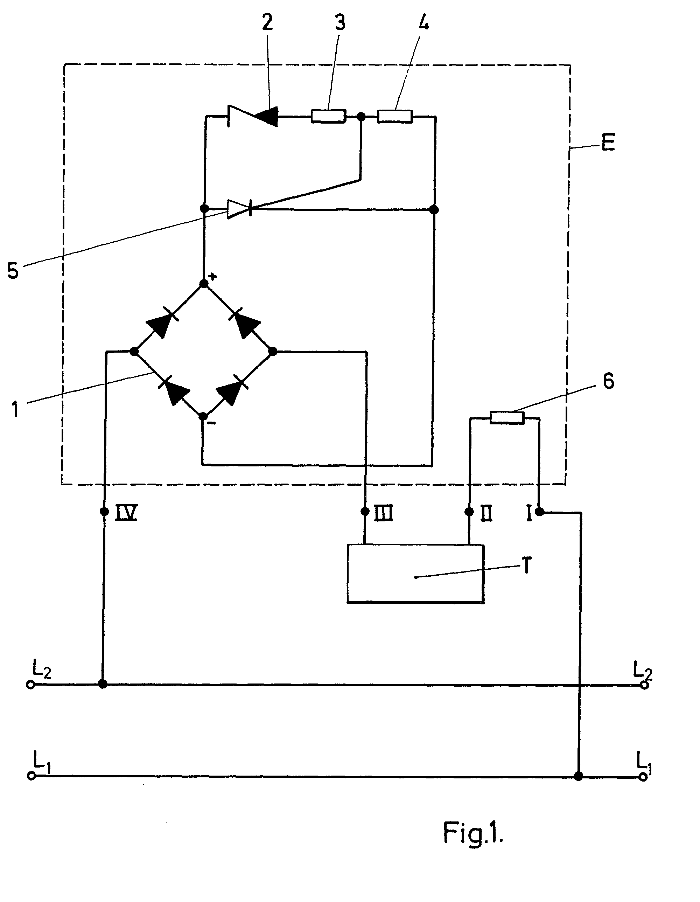

With reference to the drawings, and especially to figure 1, it may be understood how the excluder device, which has been given the general reference letter E, is made up by the combination of a rectifier (1) with a relay circuit, which consists of a zener diode (2) and a current divider made up by the resistors (3) and (4).

The relay circuit is also associated with a thyristor (5), whose anode is connected to the cathode of the zener diode (2), and to the positive of the rectifier (1), whilst the cathode is connected to earth and the switch to the current divider.

The device is completed with an independent resistor (6), able to cause a voltage drop equivalent to that which determines the rest of the described system, so that it can, in this way, equilibrate the telephone line.

As it may be seen from this description and from the drawings, the device consists of four connection leads, of which two belong to the resistor (6), and further two lead to the input of the bridge rectifier (1).

The device is installed by connecting any one of the resistor leads (I, in the illustrated example ) to one of the poles (L1) of the telephone line, and one of the leads of the bridge rectifier (IV in the example) to the other pole (L2) of the line. Thus, between the other two free leads (II and III) belonging to the resistor and the rectifier respectively, it is possible to have a telephone T, which is controlled as described below.

As soon as the telephone T is taken off, a determinate current appears in the outlets of the bridge rectifier (1). This current then sets off the relay circuit, which closes the line so that the telephone call can be made. However, once this occurs, the current causing it drops to a level which does not allow activation of the thyristors in the devices installed in the other telephones on the line, leaving them cut off although still in parallel on the line.

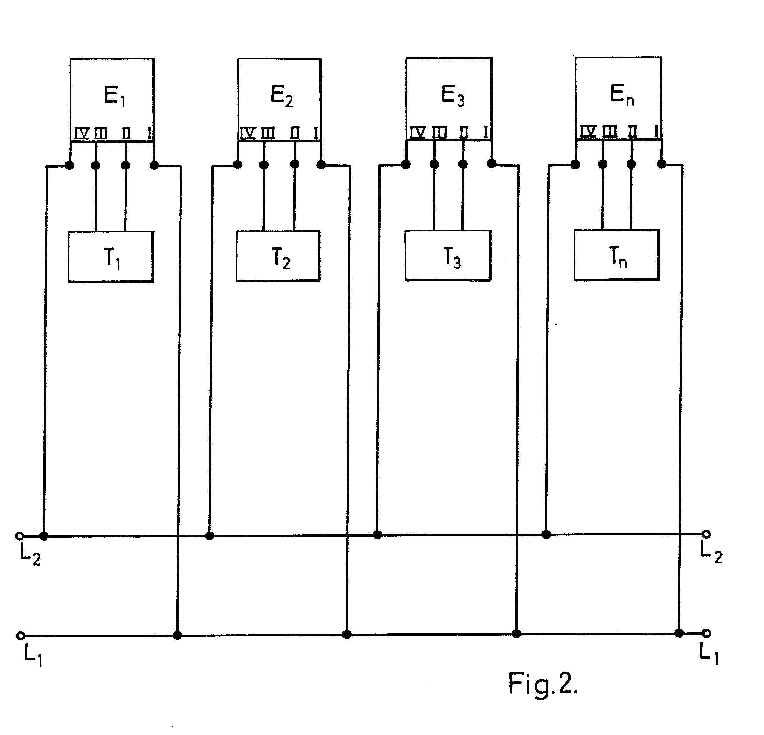

Such an outcome can be understood by observing figure 2, where telephones T1 to Tn are installed on the line L1-L2, each one incorporating one excluder device, E1 to En, respectively.

As it will be understood when the telephone $\underline{T}$ is taken off, the corresponding relay circuit of the excluder device $\underline{E}$ will act as an interruptor, cutting off the other telephones. This occurs despite the fact that they are installed in parallel, since the current in their respective excluders does not reach a high enough level to activate their relay circuits.

It has to be understood that the invention is in no way limited to the details such as described and shown because many variants and modifications may be brought thereto without departing from the scope of this invention.

## CLAIM.

Excluder device for telephones installed in parallel, characterised in that it basically consists of a combination of a full wave bridge rectifier (1) with a relay circuit, made up of a zener diode (2) and a current divider consisting of two resistors (3,4) the relay circuit being associated with a thyristor (5), whose anode is connected to the cathode of the zener diode and to the positive of the rectifier (1), whilst the cathode is connected to earth and the switch to the current divider, and in that an independent resistor is incorporated, able to cause a voltage drop equivalent to that which determines the rest of the telephone system.

Fig.1.

0 182 393

Fig.2.